# EUROPÄISCHE PATENTSCHRIFT

(11) **EP 1 555 344 B1**
(45) Veröffentlichungstag und Bekanntmachung des Hinweises auf die Patenterteilung: **07.01.2009**
(21) Anmeldenummer: 04105657.3
(22) Anmeldetag: 10.11.2004
(51) Int. Cl.: D21G 1/02

(54) **Beheizbare Walze**
Heatable roll
Rouleau chauffable

(30) Priorität: 14.01.2004 DE 102004002003
(43) Veröffentlichungstag der Anmeldung: 20.07.2005
(73) Patentinhaber: Voith Patent GmbH, 89522 Heidenheim (DE)
(72) Erfinder: Schnyder, Eugen, 5622, Waltenschwil (CH)
(74) Vertreter: Kunze, Klaus

(56) Entgegenhaltungen:
- DE-A1- 4 126 232
- DE-U1- 9 301 417

## Beschreibung

Die Erfindung betrifft eine beheizbare Walze, insbesondere zur thermischen Behandlung von Materialbahbnen, mit einem um ein Stützsystem umlaufenden Walzenmantel.

Beispielsweise bei der thermischen Verfestigung von Vliesstoffen oder ähnlichen Materialien, bei bestimmten textilen Veredelungsprozessen wie insbesondere beim Prägen von Textilien, usw. wird die betreffende Materialbahn durch einen zwischen zwei beheizten Walzen gebildeten Walzenspalt geführt. Dabei kann es unter bestimmten Umständen zweckmäßig sein, wenn zumindest eine der beiden Walzen als Biegeausgleichswalze ausgeführt ist. In der Regel werden die Walzen mittels eines Wärmeträgermediums beheizt, wobei bei Biegeausgleichswalzen das Wärmeträgermedium in der Regel gleichzeitig als Stütz- und Schmierstoff verwendet wird. Derartige Walzen besitzen einerseits den Nachteil, dass eine sehr aufwändige Peripherie erforderlich ist. Andererseits ist die Heizleistung, die durch den Mantel geleitet werden kann, begrenzt. Bei höheren Bahngeschwindigkeiten ist das Abdichten der Walzen problematisch.

Es wurde bereits eine Walzenkonstruktion vorgeschlagen, bei der ein Doppelmantel eingesetzt wird, um beim Wechseln des außen liegenden Mantels das Öl zu kapseln. Der außen liegende Mantel kann also einfach abgezogen und neu aufgeschoben werden. Der Innenmantel ist so ausgeführt, dass im drucklosen Zustand ein geringes Spiel zwischen Innen- und Außenmantel vorliegt, welches im Betrieb durch einen leicht erhöhten Walzeninnendruck aufgehoben wird, der ein leichtes Aufblähen des Innenmantels mit sich bringt (vgl. z.B. DE 40 26 007 A1).

Die DE-A-4126232 offenbart eine beheizbare Walze, insbesondere zur thermischen Behandlung von Materialbahnen, mit einem um ein Stützsystem umlaufenden mehrschichtigen Walzenmantel. Zur Temperierung der Walze sind Luftdüsen vorgesehen.

Die DE-A-9301417 zeigt eine Walze, in deren Mantel sich Schichten aus steifem und schwingungsdämpfenden Material abwechseln. Das schwingungsdämpfende Material kann auch wärmedämmend wirken.

Der Erfindung liegt die Aufgabe zugrunde, eine verbesserte beheizbare Walze der vorstehend genannten Art zu schaffen, bei der der außen liegende Mantel getrennt vom Stützsystem bzw. dem Walzenkern beheizbar ist.

Die Aufgabe wird erfindungsgemäß dadurch gelöst, dass der Walzenmantel einen beheizbaren Außenmantel und einen zwischen diesem Außenmantel und dem Stützsystem angeordneten wärmeisolierenden Innenmantel umfasst, wobei der wärmeisolierende Innenmantel eine geringere Dicke als der beheizbare Außenmantel besitzt und der Außenmantel induktiv beheizbar ist.

Aufgrund dieser Ausbildung kann der Außenmantel nunmehr getrennt vom Stützsystem beheizt werden, wobei vorzugsweise nur der Außenmantel beheizt wird, das heißt das Stützsystem bzw. der Walzenkern unbeheizt bleibt.

Bei einer bevorzugten praktischen Ausführungsform ist die Walze als Durchbiegungseinstell- oder Durchbiegungsausgleichswalze ausgeführt, deren Stützsystem ein den Walzenmantel axial durchsetzendes drehfestes Joch sowie eine Mehrzahl von in Axialrichtung aufeinander folgenden, vorzugsweise hydraulischen Stützelementen umfasst. Dabei ist der wärmeisolierende Innenmantel vorzugsweise durch die Stützelemente direkt beaufschlagbar.

Bevorzugt besteht der wärmeisolierende Innenmantel aus einem temperaturbeständigen Kunststoff. Dabei kann dieser wärmeisolierende Innenmantel beispielsweise aus PEEK oder dergleichen bestehen. Es kann auch sinnvoll sein, diesen Mantel mit einer geeigneten tribologischen Funktionsschicht - z.B. einer Teflonschicht - zu versehen, um Abtrieb vorzubeugen, der sonst aufgrund der konzeptionsbedingt auftretenden Relativbewegungen entstehen könnte. Das Gleiche gilt für den Außenmantel.

Die Walze kann insbesondere als selbstanstellende F-Walze ausgeführt sein. Grundsätzlich ist jedoch auch eine Ausführung beispielsweise als konzentrisch geführte K-Walze denkbar.

Von Vorteil ist insbesondere auch eine solche Ausführung des wärmeisolierenden Innenmantels, dass dieser gleichzeitig als Abdichtung gegenüber der Führungslagerung dient.

Im nicht beheizten Zustand der Walze und gegebenenfalls bei nicht aktivierten Stützelementen liegt bevorzugt ein Spiel zwischen dem beheizbaren Außenmantel und dem wärmeisolierenden Innenmantel vor. Im Betrieb wird dieses Spiel vorteilhafterweise durch eine entsprechende Wärmeausdehnung des Innenmantels und/oder durch den Innendruck aufgehoben.

Der wärmeisolierende Innenmantel kann an seinem Außenumfang gerillt oder mit wenigstens einer Kerbung versehen sein. Alternativ oder zusätzlich kann der beheizbare Außenmantel an seinem Innenumfang gerillt bzw. mit wenigstens einer Kerbung versehen sein. Zum Herunterkühlen der Walze ist in dem gerillten bzw. gekerbten Bereich zwischen Außenmantel und Innenmantel vorteilhafterweise Kaltluft einblasbar.

Der beheizbare Außenmantel besteht vorzugsweise aus Stahl.

Gemäß einer bevorzugten praktischen Ausführungsform der erfindungsgemäßen Walze ist der beheizbare Außenmantel auf den wärmeisolierenden Innenmantel aufschiebbar.

Bevorzugt ist der Außenmantel von außen beheizbar.

Im Fall einer F-Walze ist die Induktionsschleife bevorzugt mit der F-Kulisse bewegbar, so dass ein konstanter Abstand zum Außenmantel eingehalten werden kann.

So kann die Dicke des wärmeisolierenden Innenmantels beispielsweise in einem Bereich von etwa 2 bis etwa 15 mm und insbesondere in einem Bereich von etwa 8 bis etwa 15 mm liegen. Zweckmäßigerweise besitzt der wärmeisolierende Innenmantel eine mittlere Dicke von etwa 10 mm.

Der beheizbare Außenmantel kann mit einer Gummierung versehen sein. Neben Gummi sind auch geeignete Kunststoffe denkbar.

Erforderlichenfalls kann ein Kantilever zum Aufhängen der Walze in der Stuhlung vorgesehen sein.

Von Vorteil ist insbesondere auch, wenn auf der Bedienseite ein Lager zum Freilegen des abzuziehenden Außenmantels vorgesehen ist.

Der beheizbare Außenmantel und der wärmeisolierende Innenmantel können beispielsweise auch miteinander verklebt sein. Entsprechend wärmebeständige Kleber sind bereits auf dem Markt.

Die erfindungsgemäße Walze ist mit besonderem Vorteil bei der Herstellung von Vliesstoffen oder ähnlichen Materialien und dabei insbesondere zur Verfestigung der betreffenden Materialien verwendbar. Sie ist darüber hinaus mit Vorteil insbesondere auch für bestimmte textile Veredelungsprozesse wie insbesondere für das Prägen von Textilien usw. anwendbar.

Die erfindungsgemäße Walze ist mit Vorteil jedoch beispielsweise auch als jeweilige Gegenwalze in einem NipcoFlex-Kalander verwendbar.

Die erfindungsgemäße Walze erlaubt den Einsatz einfacher, erprobter Technologie für den Biegeausgleich sowie eine vom Stützsystem getrennte Beheizung des Walzenmantels. Das Stützsystem kann also kalt bzw. relativ kalt gefahren werden. Es kann mehr oder weniger jede so genannten NIPCO-Walze zu einer beheizbaren Walze erweitert werden. Insbesondere bei breiten Warenbahnen, die mit hohen Bahngeschwindigkeiten gefahren werden, ist dies von erheblichem Vorteil. Zudem kann die Heizenergie direkt von außen aufgebracht werden, und es sind erheblich höhere Leistungsdichten erzielbar.

Die Erfindung wird im Folgenden anhand von Ausführungsbeispielen unter Bezugnahme auf die Zeichnung näher erläutert; in dieser zeigen:
- Fig. 1: eine schematische Längsschnittdarstellung einer beispielhaften Ausführungsform der erfindungsgemäßen beheizbaren Walze,
- Fig. 2: eine schematische Querschnittsdarstellung der Walze gemäß Fig. 1, geschnitten entlang der Linie A-A in Fig. 1, und
- Fig. 3 bis 7: verschiedene Diagramme zur radialen Temperaturverteilung über dem Doppelmantel der Walze für unterschiedliche Oberflächentemperaturen, unterschiedliche Wandstärken des wärmeisolierenden Innenmantels und unterschiedliche Heizleistungen.

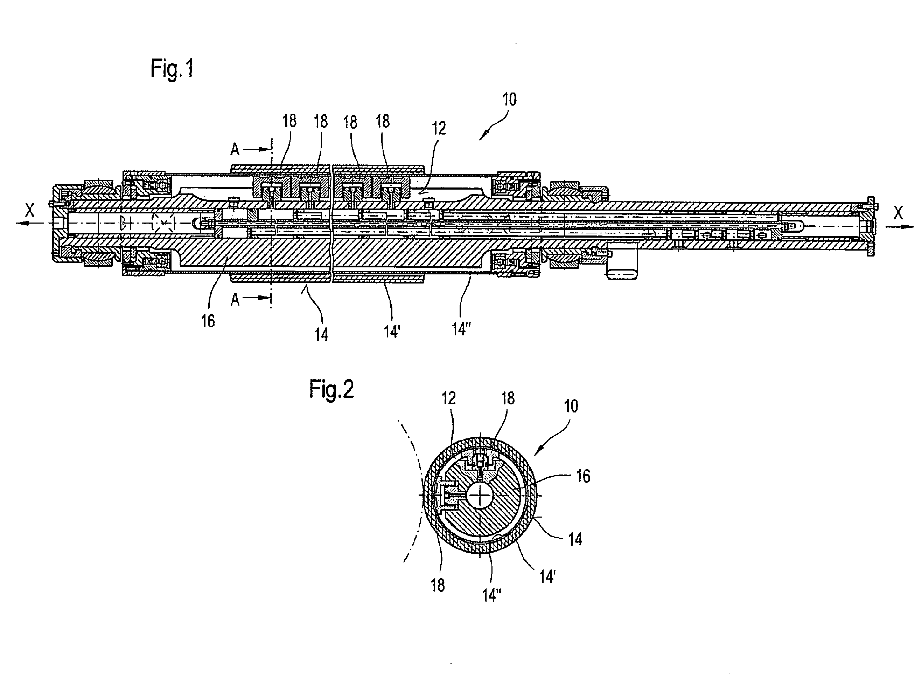

Die Fig. 1 und 2 zeigen in schematischer Längsschnittdarstellung bzw. in schematischer Querschnittsdarstellung eine beispielhafte Ausführungsform einer erfindungsgemäßen beheizbaren Walze 10, die insbesondere zur thermischen Behandlung von Materialbahnen einsetzbar ist.

Der um ein Stützsystem 12 umlaufende Walzenmantel 14 dieser beheizbaren Walze 10 umfasst einen beheizbaren Außenmantel 14' und einen zwischen diesem und dem Stützsystem 12 angeordneten wärmeisolierenden Innenmantel 14".

Der Außenmantel 14' ist somit getrennt vom Stützsystem 12 beheizbar, wobei vorzugsweise nur der Außenmantel 14' beheizbar ist, das heißt das Stützsystem 12 unbeheizt bleibt bzw. kalt oder relativ kalt betrieben wird.

Im vorliegenden Fall ist die Walze 10 als Durchbiegungseinstellwalze ausgeführt, deren Stützsystem 12 ein den Walzenmantel 14 axial durchsetzendes drehfestes Joch 16 sowie eine Mehrzahl von in Axialrichtung X aufeinander folgenden, vorzugsweise hydraulischen Stützelementen 18 umfasst. Im vorliegenden Fall sind beispielsweise zwei Stützelementreihen vorgesehen (vgl. Fig. 2).

Wie anhand der Fig. 1 und 2 zu erkennen ist, wird der wärmeisolierende Innenmantel 14" durch die Stützelemente 18 direkt beaufschlagt.

Der wärmeisolierende Innenmantel 14" besteht vorzugsweise aus einem temperaturbeständigen Kunststoff, wobei er beispielsweise aus Peek oder dergleichen bestehen kann.

Im vorliegenden Fall ist die Walze 10 als konzentrisch geführte K-Walze ausgeführt. Es ist jedoch insbesondere auch eine Ausführung als selbsteinstellende F-Walze möglich. Dabei kann der wärmeisolierende Innenmantel 14" insbesondere auch so ausgeführt sein, dass er gleichzeitig als Abdichtung gegenüber der Führungslagerung dient.

Im nicht beheizten Zustand der Walze 10 und bei nicht aktivierten Stützelementen 18 kann zwischen dem beheizbaren Außenmantel 14' und dem wärmeisolierenden Innenmantel 14" ein Spiel vorliegen. Dieses Spiel wird im Betrieb durch eine entsprechende Wärmeausdehnung des Innenmantels 14" und/oder durch den Innendruck aufgehoben. Im vorliegenden Fall wird der Spalt in erster Linie durch die Wärmeausdehnung des Innenmantels aufgehoben. Der Außenmantel 14' und der Innenmantel 14" können jedoch auch miteinander verklebt sein.

Der Außenumfang des wärmeisolierenden Innenmantels 14" und/oder der Innenumfang des beheizbaren Außenmantels 14' kann gerillt oder mit wenigstens einer Kerbung versehen sein. Zum Herunterkühlen der Walze 10 kann dann durch den gerillten bzw. gekerbten Bereich zwischen Außenmantel 14' und Innenmantel 14" Kaltluft geblasen werden.

Der vorzugsweise aus Stahl bestehende beheizbare Außenmantel 14' ist einfach auf den wärmeisolierenden Innenmantel 14" aufschiebbar.

Der Außenmantel 14' ist bevorzugt von außen beheizbar. Vorteilhafterweise wird dieser Außenmantel 14' induktiv beheizt. Im Fall einer F-Walze kann die Induktionsschleife mit der F-Kulisse bewegbar sein, so dass für einen konstanten Abstand zum zu beheizenden Außenmantel 14' gesorgt ist.

Wie anhand der Fig. 1 und 2 zu erkennen ist, besitzt der wärmeisolierende Innenmantel 14" eine deutlich geringere Dicke als der beheizbare Außenmantel 14'. Dabei kann die Dicke des wärmeisolierenden Innenmantels 14" beispielsweise in einem Bereich von etwa 2 bis etwa 15 mm und insbesondere in einem Bereich von etwa 8 bis etwa 15 mm liegen. Bevorzugt besitzt der wärmeisolierende Innenmantel 14" eine mittlere Dicke von etwa 10 mm.

Der beheizbare Außenmantel 14' kann mit einer Gummierung versehen sein. Neben Gummi sind auch geeignete Kunststoffe denkbar.

In bestimmten Fällen kann es von Vorteil sein, wenn ein Kantilever zum Aufhängen der Walze 10 in der Strömung vorgesehen sein. Ein solcher Kantilever ist jedoch nicht zwingend.

Auf der Bedienseite ist zweckmäßigerweise ein Lager zum Freilegen des abzuziehenden Außenmantels 14' vorgesehen.

Die Walze 10 ist mit besonderem Vorteil bei der Herstellung von Vliesstoffen oder ähnlichen Materialien und hierbei insbesondere zur Verfestigung der betreffenden Materialien verwendbar. Sie ist darüber hinaus mit Vorteil insbesondere auch für bestimmte textile Veredelungsprozesse wie insbesondere für das Prägen von Textilien usw. anwendbar. Von Vorteil ist insbesondere auch eine Verwendung der Walze 10 als jeweilige Gegenwalze eines NipcoFlex-Kalanders.

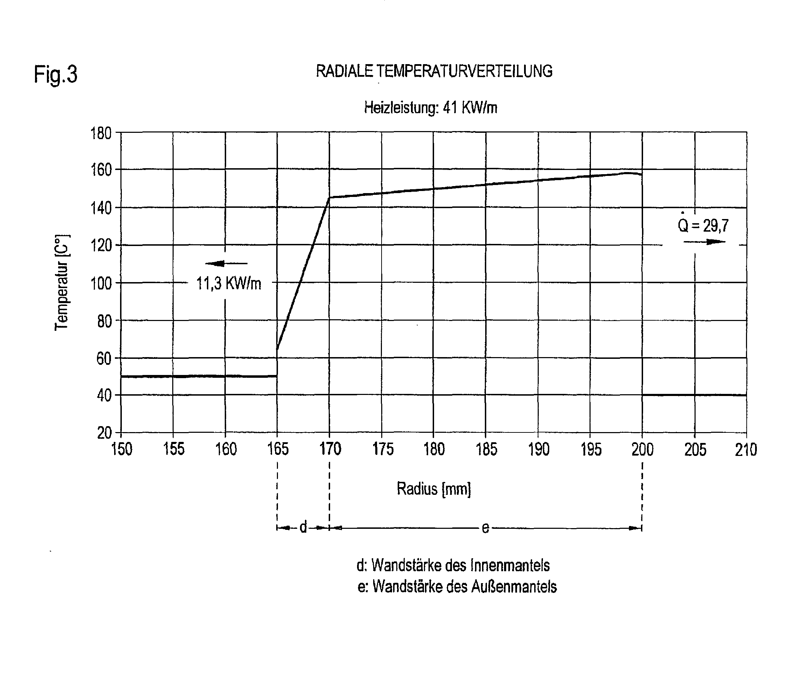

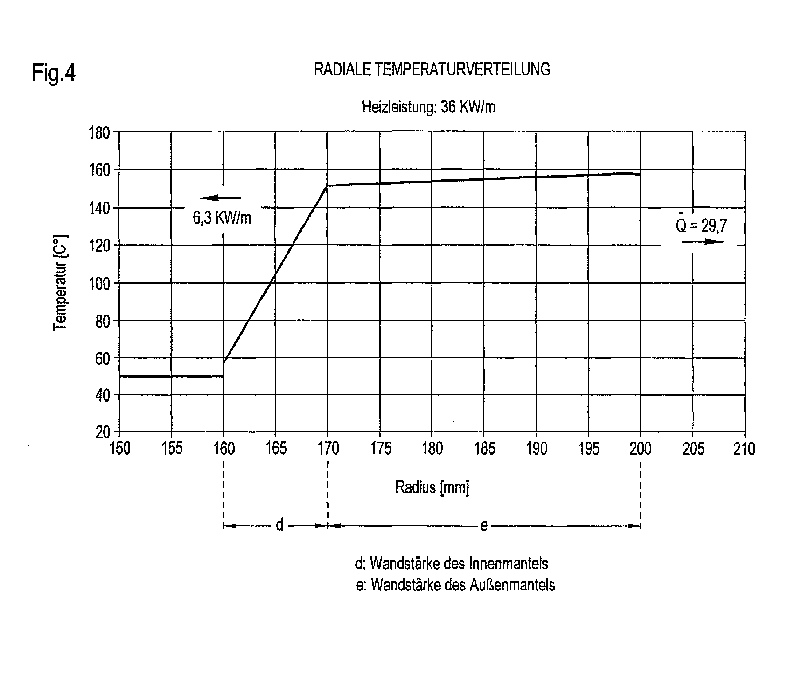

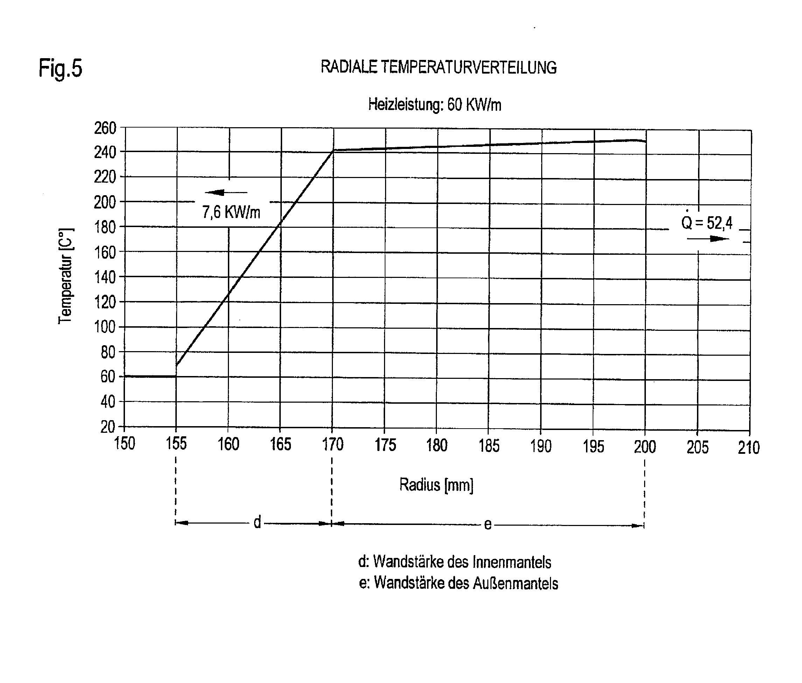

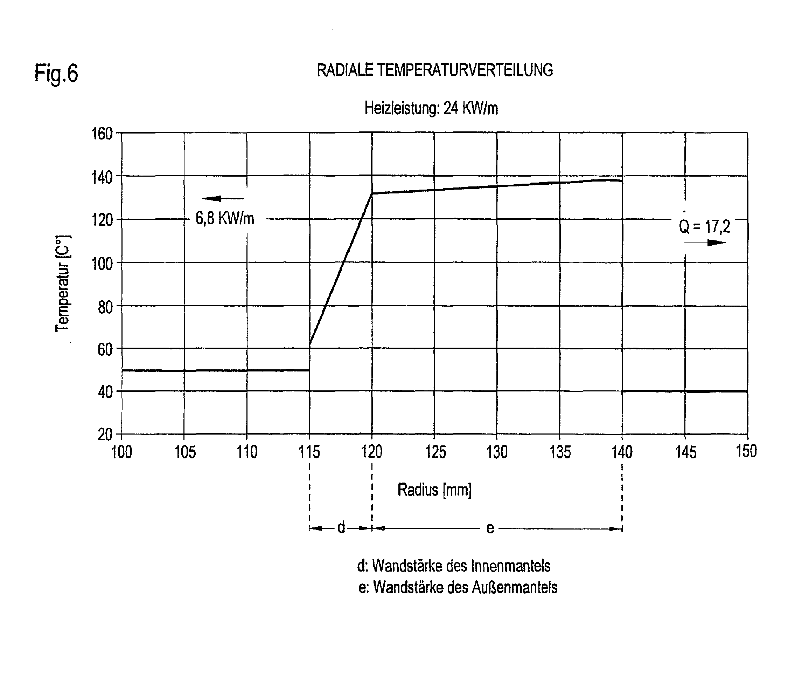

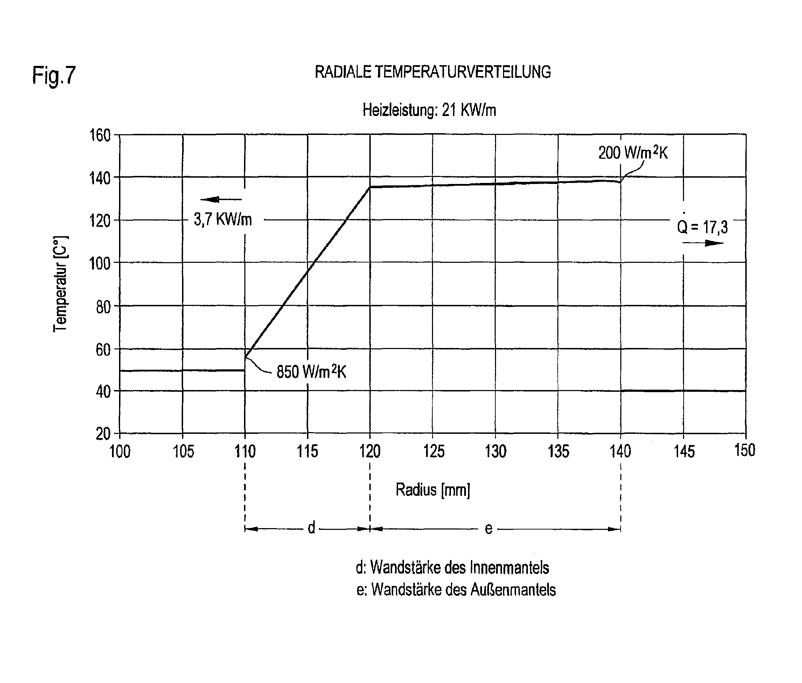

Die Fig. 3 bis 7 zeigen verschiedene Diagramme zur radialen Temperaturverteilung über dem Doppelmantel der Walze für unterschiedliche Oberflächentemperaturen, unterschiedliche Wandstärken des wärmeisolierenden Innenmantels und unterschiedliche Heizleistungen. Dabei war ein wärmeisolierender Innenmantel aus Peek vorgesehen. Wie anhand dieser Fig. 3 bis 7 zu erkennen ist, sind die Verluste nach innen auf ein Minimum begrenzt.

### Bezugszeichenliste

- 10: beheizbare Walze
- 12: Stützsystem
- 14: Walzenmantel
- 14': beheizbarer Außenmantel
- 14": wärmeisolierender Innenmantel
- 16: drehfestes Joch
- 18: hydraulisches Stützelement
- d: Wandstärke des Innenmantels
- e: Wandstärke des Außenmantels
- X: Axialrichtung

## Patentansprüche

1. Beheizbare Walze (10), insbesondere zur thermischen Behandlung von Materialbahnen, mit einem um ein Stützsystem (12) umlaufenden Walzenmantel (14), wobei
der Walzenmantel (14) einen beheizbaren Außenmantel (14') und einen zwischen diesem Außenmantel (14') und dem Stützsystem (12) angeordneten wärmeisolierenden Innenmantel (14") umfasst, **dadurch gekennzeichnet, dass** der wärmeisolierende Innenmantel (14") eine geringere Dicke als der beheizbare Außenmantel (14') besitzt und der Außenmantel (14') induktiv beheizbar ist.

2. Walze nach Anspruch 1,
**dadurch gekennzeichnet,**
**dass** der Außenmantel (14') getrennt vom Stützsystem (12) beheizbar ist, wobei vorzugsweise nur der Außenmantel (14') beheizbar ist, d.h. das Stützsystem (12) unbeheizt bleibt.

3. Walze nach Anspruch 1 oder 2,
**dadurch gekennzeichnet,**
**dass** sie als Durchbiegungseinstellwalze ausgeführt ist, deren Stützsystem (12) ein den Walzenmantel (14) axial durchsetzendes drehfestes Joch (16) sowie eine Mehrzahl von in Axialrichtung (X) aufeinander folgenden, vorzugsweise hydraulischen Stützelementen (18) umfasst.

4. Walze nach Anspruch 3,
**dadurch gekennzeichnet,**
**dass** der wärmeisolierende Innenmantel (14") durch die Stützelemente (18) direkt beaufschlagbar ist.

5. Walze nach einem der vorhergehenden Ansprüche,
**dadurch gekennzeichnet,**
**dass** der wärmeisolierende Innenmantel (14") aus einem temperaturbeständigen Kunststoff besteht.

6. Walze nach Anspruch 5,
**dadurch gekennzeichnet,**
**dass** der wärmeisolierende Innenmantel (14") aus PEEK besteht.

7. Walze nach einem der vorhergehenden Ansprüche,
**dadurch gekennzeichnet,**
**dass** der Außenmantel (14') und/oder der Innenmantel (14") mit einer tribologischen Funktionsschicht, z.B. einer Teflonschicht versehen ist.

8. Walze nach einem der vorhergehenden Ansprüche,
**dadurch gekennzeichnet,**
**dass** sie als selbstanstellende F-Walze ausgeführt ist.

9. Walze nach einem der Ansprüche 1 bis 7,
**dadurch gekennzeichnet,**
**dass** sie als konzentrisch geführte K-Walze ausgeführt ist.

10. Walze nach einem der vorhergehenden Ansprüche,
**dadurch gekennzeichnet,**
**dass** der wärmeisolierende Innenmantel (14") gleichzeitig als Abdichtung gegenüber der Führungslagerung dient.

11. Walze nach einem der vorhergehenden Ansprüche,
**dadurch gekennzeichnet,**
**dass** im nicht beheizten Zustand der Walze (10) und gegebenenfalls bei nicht aktivierten Stützelementen (18) ein Spiel zwischen dem beheizbaren Außenmantel (14') und dem wärmeisolierenden Innenmantel (14") vorliegt.

12. Walze nach Anspruch 11,
**dadurch gekennzeichnet,**
**dass** das Spiel im Betrieb durch eine entsprechende Wärmeausdehnung des Innenmantels (14") und/oder durch den Innendruck aufgehoben wird.

13. Walze nach einem der vorhergehenden Ansprüche,
**dadurch gekennzeichnet,**
**dass** der wärmeisolierende Innenmantel (14") an seinem Außenumfang gerillt oder mit wenigstens einer Kerbung ist.

14. Walze nach einem der vorhergehenden Ansprüche,
**dadurch gekennzeichnet,**
**dass** der beheizbare Außenmantel (14') an seinem Innenfang gerillt bzw. mit wenigstens einer Kerbung versehen ist.

15. Walze nach Anspruch 13 oder 14,
**dadurch gekennzeichnet,**
**dass** zum Herunterkühlen der Walze in den gerillten bzw. gekerbten Bereich zwischen Außenmantel (14') und Innenmantel (14") Kaltluft einblasbar ist.

16. Walze nach einem der vorhergehenden Ansprüche,
**dadurch gekennzeichnet,**
**dass** der beheizbare Außenmantel (14') aus Stahl besteht.

17. Walze nach einem der vorhergehenden Ansprüche,
**dadurch gekennzeichnet,**
**dass** der beheizbare Außenmantel auf den wärmeisolierenden Innenmantel (14") aufschiebbar ist.

18. Walze nach einem der vorhergehenden Ansprüche,
**dadurch gekennzeichnet,**
**dass** der Außenmantel (14') von außen beheizbar ist.

19. Walze nach Anspruch 8,
**dadurch gekennzeichnet,**
**dass** im Fall einer F-Walze die Induktionsschleife mit der F-Kulisse bewegbar ist.

20. Walze nach einem der vorhergehenden Ansprüche,
**dadurch gekennzeichnet,**
**dass** die Dicke des wärmeisolierenden Innenmantels (14") in einem Bereich von etwa 2 bis etwa 15 mm und insbesondere in einem Bereich von etwa 8 bis etwa 15 mm liegt.

21. Walze nach einem der vorhergehenden Ansprüche,
**dadurch gekennzeichnet,**
**dass** der wärmeisolierende Innenmantel (14") eine mittlere Dicke von etwa 10 mm besitzt.

22. Walze nach einem der vorhergehenden Ansprüche,
**dadurch gekennzeichnet,**
**dass** der beheizbare Außenmantel (14') mit einer Gummierung oder einem Kunststoffbelag versehen ist.

23. Walze nach einem der vorhergehenden Ansprüche,
**dadurch gekennzeichnet,**
**dass** ein Kantilever zum Aufhängen der Walze (10) in der Stuhlung vorgesehen ist.

24. Walze nach einem der vorhergehenden Ansprüche,
**dadurch gekennzeichnet,**
**dass** auf der Bedienseite ein Lager zum Freilegen des abzuziehenden Außenmantels (14') vorgesehen ist.

25. Walze nach einem der vorhergehenden Ansprüche,
**dadurch gekennzeichnet,**
**dass** der beheizbare Außenmantel (14') und der wärmeisolierende Innenmantel (14") miteinander verklebt sind.

26. Verwendung der Walze nach einem der vorhergehenden Ansprüche bei der Herstellung von Vliesstoffen.

27. Verwendung der Walze nach einem der vorhergehenden Ansprüche zur Verfestigung von Vliesstoffen.

28. Verwendung der Walze nach einem der vorhergehenden Ansprüche für textile Veredelungsprozesse wie insbesondere für das Prägen von Textilien.

29. Verwendung der Walze nach einem der vorhergehenden Ansprüche als Gegenwalze eines NipcoFlex-Kalanders.

## Claims

1. Heatable roll (10), in particular for the thermal treatment of material webs, having a roll shell (14) revolving around a supporting system (12), **characterized in that** the roll shell (14) comprising a heatable outer shell (14') and a thermally insulating inner shell (14'') arranged between this outer shell (14') and the supporting system (12) **characterized in that** the thermally insulating inner shell (14") has a lower thickness than the heatable outer shell (14') and the outer shell (14') can be heated inductively.

2. Roll according to Claim 1, **characterized in that** the outer shell (14') can be heated separately from the supporting system (12), it preferably being possible for only the outer shell (14') to be heated, that is to say the supporting system (12) remains unheated.

3. Roll according to Claim 1 or 2, **characterized in that** it is designed as a controlled deflection roll, whose supporting system (12) comprises a yoke (16) which passes through the roll shell (14) axially and is fixed against rotation, and a plurality of supporting elements (18) which follow one another in the axial direction (X) and are preferably hydraulic.

4. Roll according to Claim 3, **characterized in that** the thermally insulating inner shell (14") can be acted on directly by the supporting elements (18).

5. Roll according to one of the preceding claims, **characterized in that** the thermally insulating inner shell (14") consists of a temperature-resistant plastic.

6. Roll according to Claim 5, **characterized in that** the thermally insulating inner shell (14") consists of PEEK.

7. Roll according to one of the preceding claims, **characterized in that** the outer shell (14') and/or the inner shell (14") are/is provided with a tribological functional layer, for example a Teflon layer.

8. Roll according to one of the preceding claims, **characterized in that** it is designed as a self-adjusting F roll.

9. Roll according to one of Claims 1 to 7, **characterized in that** it is designed as a concentrically guided K roll.

10. Roll according to one of the preceding claims, **characterized in that** the thermally insulating inner shell (14") is simultaneously used as a seal with respect to the guide mounting.

11. Roll according to one of the preceding claims, **characterized in that**, in the unheated state of the roll (10) and, if appropriate, when the supporting elements (18) are not activated, there is a clearance between the heatable outer shell (14') and the thermally insulating inner shell (14").

12. Roll according to Claim 11, **characterized in that** the clearance is taken up in operation by means of appropriate thermal expansion of the inner shell (14") and/or by the internal pressure.

13. Roll according to one of the preceding claims, **characterized in that** the thermally insulating inner shell (14") is grooved or provided with at least one notch on its outer circumference.

14. Roll according to one of the preceding claims, **characterized in that** the heatable outer shell (14') is grooved or provided with at least one notch on its inner circumference.

15. Roll according to Claim 13 or 14, **characterized in that,** in order to cool the roll down, cold air can be blown into the grooved or notched region between outer shell (14') and inner shell (14").

16. Roll according to one of the preceding claims, **characterized in that** the heatable outer shell (14') consists of steel.

17. Roll according to one of the preceding claims, **characterized in that** the heatable outer shell can be pushed onto the thermally insulating inner shell (14'').

18. Roll according to one of the preceding claims, **characterized in that** the outer shell (14') can be heated from outside.

19. Roll according to Claim 18, **characterized in that,** in the case of an F roll, the induction loop can be moved with the slotted F guide.

20. Roll according to one of the preceding claims, **characterized in that** the thickness of the thermally insulating inner shell (14") lies in a range from about 2 to about 15 mm and in particular in a range from about 8 to about 15 mm.

21. Roll according to one of the preceding claims, **characterized in that** the thermally insulating inner shell (14") has an average thickness of about 10 mm.

22. Roll according to one of the preceding claims, **characterized in that** the heatable outer shell (14') is provided with a rubber covering or a plastic cover.

23. Roll according to one of the preceding claims, **characterized in that** a cantilever is provided in order to suspend the roll (10) in the framing.

24. Roll according to one of the preceding claims, **characterized in that**, on the operating side, a bearing is provided in order to expose the outer shell (14') to be pulled off.

25. Roll according to one of the preceding claims, **characterized in that** the heatable outer shell (14') and the thermally insulating inner shell (14") are adhesively bonded to each other.

26. Use of the roll according to one of the preceding claims in the production of nonwovens.

27. Use of the roll according to one of the preceding claims for the consolidation of nonwovens.

28. Use of the roll according to one of the preceding claims for text and finishing processes such as, in particular, for the embossing of textiles.

29. Use of the roll according to one of the preceding claims as an opposing roll in a NipcoFlex calender.

## Revendications

1. Rouleau chauffant (10), en particulier pour le traitement thermique de bandes de matière, avec une enveloppe de rouleau (14) entourant un système de soutien (12), dans lequel l'enveloppe de rouleau (14) comprend une enveloppe extérieure chauffante (14') et une enveloppe intérieure calorifuge (14") disposée entre cette enveloppe extérieure (14') et le système de soutien (12), **caractérisé en ce que** l'enveloppe intérieure calorifuge (14") possède une épaisseur plus faible que l'enveloppe extérieure chauffante (14') et **en ce que** l'enveloppe extérieure (14') peut être chauffée par induction.

2. Rouleau selon la revendication 1, **caractérisé en ce que** l'enveloppe extérieure (14') peut être chauffée séparément du système de soutien (12), dans lequel de préférence seule l'enveloppe extérieure (14') peut être chauffée, c'est-à-dire que le système de soutien (12) reste non chauffé.

3. Rouleau selon la revendication 1 ou 2, **caractérisé en ce qu'**il se présente sous la forme d'un rouleau à flèche réglable, dont le système de soutien (12) comprend une monture (16) fixe en rotation et traversant axialement l'enveloppe de rouleau (14) ainsi qu'une pluralité d'éléments de soutien (18), de préférence hydrauliques, se succédant en direction axiale (X).

4. Rouleau selon la revendication 3, **caractérisé en ce que** l'enveloppe intérieure calorifuge (14") peut être commandée directement par les éléments de soutien (18).

5. Rouleau selon l'une quelconque des revendications précédentes, **caractérisé en ce que** l'enveloppe intérieure calorifuge (14") est constituée d'une matière plastique résistant à la température.

6. Rouleau selon la revendication 5, **caractérisé en ce que** l'enveloppe intérieure calorifuge (14") est constituée de PEEK.

7. Rouleau selon l'une quelconque des revendications précédentes, **caractérisé en ce que** l'enveloppe extérieure (14') et/ou l'enveloppe intérieure (14") est pourvue d'une couche fonctionnelle tribologique, par exemple une couche de téflon.

8. Rouleau selon l'une quelconque des revendications précédentes, **caractérisé en ce qu'**il se présente sous la forme d'un rouleau F autorégulateur.

9. Rouleau selon l'une quelconque des revendications 1 à 7, **caractérisé en ce qu'**il se présente sous la forme d'un rouleau W à guidage concentrique.

10. Rouleau selon l'une quelconque des revendications précédentes, **caractérisé en ce que** l'enveloppe intérieure calorifuge (14") sert en même temps d'étanchéité par rapport au palier de guidage.

11. Rouleau selon l'une quelconque des revendications précédentes, **caractérisé en ce qu'**à l'état non chauffé du rouleau (10) et éventuellement lorsque les éléments de soutien (18) ne sont pas activés, il existe un jeu entre l'enveloppe extérieure chauffante (14') et l'enveloppe intérieure calorifuge (14").

12. Rouleau selon la revendication 11, **caractérisé en ce que** le jeu est éliminé en fonctionnement par une dilatation thermique correspondante de l'enveloppe intérieure (14") et/ou par la pression interne.

13. Rouleau selon l'une quelconque des revendications précédentes, **caractérisé en ce que** l'enveloppe intérieure calorifuge (14") est striée ou est pourvue d'au moins une encoche à sa périphérie extérieure.

14. Rouleau selon l'une quelconque des revendications précédentes, **caractérisé en ce que** l'enveloppe extérieure chauffante (14') est striée ou est pourvue d'au moins une encoche à sa périphérie intérieure.

15. Rouleau selon la revendication 13 ou 14, **caractérisé en ce que** de l'air de refroidissement peut être soufflé dans les régions striées ou entaillées entre l'enveloppe extérieure (14') et l'enveloppe intérieure (14") pour le refroidissement du rouleau.

16. Rouleau selon l'une quelconque des revendications précédentes, **caractérisé en ce que** l'enveloppe extérieure chauffante (14') est constituée d'acier.

17. Rouleau selon l'une quelconque des revendications précédentes, **caractérisé en ce que** l'enveloppe extérieure chauffante peut être glissée sur l'enveloppe intérieure calorifuge (14").

18. Rouleau selon l'une quelconque des revendications précédentes, **caractérisé en ce que** l'enveloppe extérieure (14') peut être chauffée de l'extérieur.

19. Rouleau selon la revendication 18, **caractérisé en ce que**, dans le cas d'un rouleau F, la boucle d'induction est mobile avec la coulisse F.

20. Rouleau selon l'une quelconque des revendications précédentes, **caractérisé en ce que** l'épaisseur de l'enveloppe intérieure calorifuge (14") se situe dans une plage d'environ 2 à environ 15 mm, et en particulier dans une plage d'environ 8 à environ 15 mm.

21. Rouleau selon l'une quelconque des revendications précédentes, **caractérisé en ce que** l'enveloppe intérieure calorifuge (14") possède une épaisseur moyenne d'environ 10 mm.

22. Rouleau selon l'une quelconque des revendications précédentes, **caractérisé en ce que** l'enveloppe extérieure chauffante (14') est pourvue d'un revêtement caoutchouté ou d'un revêtement de matière plastique.

23. Rouleau selon l'une quelconque des revendications précédentes, **caractérisé en ce qu'**il est prévu un porte-à-faux pour la suspension du rouleau (10) dans le support.

24. Rouleau selon l'une quelconque des revendications précédentes, **caractérisé en ce qu'**il est prévu sur le côté de commande un palier permettant de dégager l'enveloppe extérieure (14') à retirer.

25. Rouleau selon l'une quelconque des revendications précédentes, **caractérisé en ce que** l'enveloppe extérieure chauffante (14') et l'enveloppe intérieure calorifuge (14") sont collées l'une à l'autre.

26. Utilisation du rouleau selon l'une quelconque des revendications précédentes, pour la fabrication de tissus non tissés.

27. Utilisation du rouleau selon l'une quelconque des revendications précédentes, pour la consolidation de tissus non tissés.

28. Utilisation du rouleau selon l'une quelconque des revendications précédentes, pour des procédés de traitement textiles tels qu'en particulier le gaufrage de textiles.

29. Utilisation du rouleau selon l'une quelconque des revendications précédentes, comme rouleau d'appui d'une calandre Nipco-Flex.
